# EUROPEAN PATENT APPLICATION

(11) **EP 4 365 670 A1**
(43) Date of publication of application: **08.05.2024**
(21) Application number: 22857456.2
(22) Date of filing: 04.07.2022
(51) Int. Cl.: G02F 1/03, G02F 1/035

(54) **OPTICAL WAVEGUIDE DEVICE, OPTICAL CHIP, AND COMMUNICATION DEVICE**

(30) Priority: 18.08.2021 CN 202110949495
(71) Applicant: Huawei Technologies Co., Ltd., Longgang Shenzhen, Guangdong 518129 (CN)
(72) Inventor: ZHU, Shiyang, Shenzhen, Guangdong 518129 (CN); YAO, Zhanshi, Shenzhen, Guangdong 518129 (CN); HUANG, Qirui, Shenzhen, Guangdong 518129 (CN)
(74) Representative: Epping - Hermann - Fischer
(86) International application number: PCT/CN2022/103685
(87) International publication number: WO 2023/020143

(57) **Abstract**

An optical waveguide device, an optical chip, and a communication device are disclosed and pertain to the field of communication technologies. The optical waveguide device includes a substrate, a target structure, and an electro-optic crystal structure. The target structure includes an insulation layer and a first optical waveguide. A bonding region of the insulation layer has a first groove, the first optical waveguide is embedded into the first groove, and a surface that is of the first optical waveguide and that is away from the substrate is flush with a surface that is of the bonding region and that is away from the substrate. The electro-optic crystal structure is bonded to a side that is of the target structure and that is away from the substrate. This application can resolve a problem that the optical waveguide device has low light modulation efficiency. This application may be applied to a device that needs to carry information based on a phase and/or an amplitude of light, for example, a device that performs communication based on light or a device that performs switch control based on light.

## Description

This application claims priority to Chinese Patent Application No. 202110949495.2, filed on August 18, 2021 and entitled "OPTICAL WAVEGUIDE DEVICE, OPTICAL CHIP, AND COMMUNICATION DEVICE", which is incorporated herein by reference in its entirety.

### TECHNICAL FIELD

This application relates to the field of communication technologies, and in particular, to an optical waveguide device, an optical chip, and a communication device.

### BACKGROUND

An optical waveguide device is a common device in the field of communication technologies, such as an optical modulator, an optical switch, or an optical phased array. The optical waveguide device usually includes an optical waveguide and an electro-optic crystal, and an entirety formed by the optical waveguide and the electro-optic crystal can implement efficient light modulation.

Currently, the optical waveguide device includes a substrate, an optical waveguide, an insulation layer, and an electro-optic crystal. The optical waveguide is located on the substrate, and the insulation layer covers the optical waveguide. In addition, a side that is of the insulation layer and that is away from the substrate is bonded to the electro-optic crystal.

However, after the electro-optic crystal and the side that is of the insulation layer and that is away from the substrate are bonded, due to the insulation layer, there is a spacing between the optical waveguide and the electro-optic crystal. This affects light modulation efficiency of the optical waveguide device.

### SUMMARY

This application provides an optical waveguide device, an optical chip, and a communication device, to resolve a problem that the optical waveguide device has low light modulation efficiency. The technical solutions are as follows. According to a first aspect, an optical waveguide device is provided. The optical waveguide device includes a substrate, a target structure, and an electro-optic crystal structure. The target structure includes an insulation layer and a first optical waveguide. A bonding region of the insulation layer has a first groove, the first optical waveguide is embedded into the first groove, and a surface that is of the first optical waveguide and that is away from the substrate is flush with a surface that is of the bonding region and that is away from the substrate. The electro-optic crystal structure is bonded to a side that is of the target structure and that is away from the substrate.

It should be noted that the bonding region may be an entire region of the insulation layer, or may be a part of region of the insulation layer. This is not limited in this application. When the bonding region is the part of region of the insulation layer, a form of the other part of region of the insulation layer is not limited in this application. The bonding region of the insulation layer is located in a region that is in the target structure and that is bonded to the electro-optic crystal structure. Therefore, that the electro-optic crystal structure is boned to the side that is of the target structure and that is away from the substrate may be understood as that the electro-optic crystal structure is bonded to a region in which the bonding region is located on the side that is of the target structure and that is away from the substrate.

Because the surface that is of the first optical waveguide and that is away from the substrate is flush with the surface that is of the bonding region of the insulation layer and that is away from the substrate, a side that is of the first optical waveguide and that is away from the substrate is not covered by the insulation layer. Therefore, there is no insulation layer between the first optical waveguide and the electro-optic crystal structure, and a distance between the first optical waveguide and the electro-optic crystal structure is small. In addition, because the distance between the first optical waveguide and the electro-optic crystal structure is negatively correlated with light modulation efficiency of the optical waveguide device, when the distance between the first optical waveguide and the electro-optic crystal structure is small, an entire optical mode field formed by the optical waveguide and the electro-optic crystal is small, and light modulation efficiency of the optical waveguide device is high. It should be understood that a slight difference, caused by a small error, between a height of the surface that is of the first optical waveguide and that is away from the substrate and a height of the surface that is of the bonding region of the insulation layer and that is away from the substrate also falls within the protection scope of this application.

Optionally, a cross section of the first optical waveguide in an extension direction perpendicular to the first optical waveguide includes a first side and a second side that are opposite to each other, the first side is close to the substrate, the second side is away from the substrate, and a length of the first side is less than or equal to a length of the second side. Because a greater length of the second side than the length of the first side indicates higher light modulation efficiency of the optical waveguide device, when the length of the first side is less than or equal to the length of the second side, light modulation efficiency of the optical waveguide device is high.

Further, the cross section further includes a third side, the third side is connected to the first side and the second side, and a range of an included angle between the third side and the second side is [60°, 80°] or [70°, 80°]. For example, the included angle α may be 70°. When the range of the included angle is [60°, 80°] or [70°, 80°], and the length of the second side is greater than the length of the first side, light modulation efficiency of the optical waveguide device is high. In addition, when the length of the first side is less than the length of the second side, the included angle α between the third side and the second side is equal to 90°.

The electro-optic crystal structure in this application has various forms. For example, the electro-optic crystal structure may include a bulk electro-optic crystal or an electro-optic crystal thin film. For example, the electro-optic crystal structure includes a lithium niobate thin film, bulk lithium niobate, a barium titanate thin film, bulk barium titanate, bulk potassium niobate, and the like. For some electro-optic crystals (such as barium titanate), an electro-optic coefficient of a bulk electro-optic crystal is higher than an electro-optic coefficient of an electro-optic crystal thin film. In this case, if the bulk electro-optic crystal of the electro-optic crystal is used as the foregoing electro-optic crystal structure, an electro-optic coefficient of the electro-optic crystal structure may be high, and light modulation efficiency of the optical waveguide device is high.

Optionally, when the electro-optic crystal structure includes the electro-optic crystal thin film, the electro-optic crystal structure includes a support layer and the electro-optic crystal thin film that are superposed, and the side that is of the target structure and that is away from the substrate is bonded to a side on which the electro-optic crystal thin film in the electro-optic crystal structure is located. The support layer is located on a side that is of the electro-optic crystal thin film and that is away from the substrate. Before the electro-optic crystal structure is bonded to the target structure, the electro-optic crystal thin film is located on the support layer, and the support layer is configured to support the electro-optic crystal thin film. When the electro-optic crystal structure includes the electro-optic crystal thin film, the electro-optic crystal structure may alternatively not include the support layer. This is not limited in this application. When the electro-optic crystal structure does not include the support layer or includes a thinner support layer, a thickness of the entire optical waveguide device is small, which facilitates subsequent packaging of the optical waveguide device.

Further, the optical waveguide and the electro-optic crystal structure in the optical waveguide device can modulate light under an action of an electric field. Therefore, the optical waveguide device provided in this application may further include an electrode configured to form the electric field. It should be noted that there are various implementations of the electrode in the optical waveguide device, and the following uses two of the implementations as an example for description.

In an optional implementation, the bonding region further has a plurality of second grooves, and the target structure further includes a plurality of electrodes embedded into the plurality of second grooves in a one-to-one correspondence, where a surface that is of at least one electrode and that is away from the substrate is flush with the surface that is of the bonding region and that is away from the substrate, the first optical waveguide is located between the plurality of electrodes, and the electrode and the first optical waveguide in the optical waveguide device are arranged one to one at spacings. For example, the target structure includes two first optical waveguides, the bonding region has three second grooves that are sequentially arranged, the target structure includes three electrodes that are embedded into the three grooves in a one-to-one correspondence, and one first optical waveguide is arranged between every two adjacent electrodes.

When the surface that is of the electrode and that is away from the substrate is flush with the surface that is of the bonding region of the insulation layer and that is away from the substrate, a side that is of the electrode and that is away from the substrate is not covered by the insulation layer. Therefore, there is no insulation layer between the electrode and the electro-optic crystal structure, and a distance between the electrode and the electro-optic crystal structure is small. In addition, because the distance between the electrode and the electro-optic crystal structure is negatively correlated with light modulation efficiency of the optical waveguide device, when the distance between the electrode and the electro-optic crystal structure is small, light modulation efficiency of the optical waveguide device is high.

In another optional implementation, the optical waveguide device further includes an electrode, and the electrode is located between the substrate and the insulation layer; and the electro-optic crystal structure includes the support layer and the electro-optic crystal thin film that are superposed, and the support layer includes a conductive material, and the side that is of the target structure and that is away from the substrate is bonded to the side on which the electro-optic crystal thin film in the electro-optic crystal structure is located. In this case, an electric field may be formed between the electrode and the support layer. Both the first optical waveguide and the electro-optic crystal structure are located in the electric field, and light modulation is performed under an action of the electric field.

In this application, regardless of the implementation of the electrode, a material of the electrode may include at least one of aluminum, tungsten, titanium, titanium nitride, and indium tin oxide. In addition, when the material of the electrode is tungsten, if the electrode is also prepared on a flow plate platform of a complementary metal-oxide-semiconductor (Complementary Metal-Oxide-Semiconductor, CMOS) process, in a process of preparing the electrode, because a residue of tungsten has little impact on performance of another device prepared on the flow plate platform of the CMOS process, if the residue of tungsten remains on the platform, the material of tungsten can be better compatible with the CMOS process.

That the bonding region of the insulation layer is in direct contact with the electro-optic crystal structure is used as an example in the foregoing descriptions. Optionally, there may be another film layer between the bonding region of the insulation layer and the electro-optic crystal structure. For example, there may be a dielectric layer between the bonding region of the insulation layer and the electro-optic crystal structure. The dielectric layer is configured to prevent metal ions on a side on which the insulation layer is located from diffusing to the electro-optic crystal structure, to avoid performance deterioration of the electro-optic crystal structure caused by diffusion of the metal ions on the side on which the insulation layer is located to the electro-optic crystal structure.

Optionally, a thickness of the dielectric layer is less than or equal to 10 nanometers. For example, the thickness of the dielectric layer ranges from 2 nanometers to 10 nanometers. It can be learned that the thickness of the dielectric layer is small, the distance between the first optical waveguide and the electro-optic crystal structure is small, the distance between the electrode and the electro-optic crystal structure is also small, and light modulation efficiency of the entire optical waveguide device is high.

Optionally, a melting point of the dielectric layer is lower than a melting point of the target structure and a melting point of the electro-optic crystal structure. It should be noted that the target structure includes a plurality of parts, and the melting point of the target structure may be a melting point of a part that is in the plurality of parts and that is bonded to the electro-optic crystal structure. The melting point of the electro-optic crystal structure may be a melting point of a part that is in the electro-optic crystal structure and that is bonded to the target structure. Because the melting point of the dielectric layer is lower than the melting point of the target structure and the melting point of the electro-optic crystal structure, when the target structure is bonded to the electro-optic crystal structure, the target structure, the dielectric layer, and the electro-optic crystal structure may be heated as a whole, so that the dielectric layer is melted, and the target structure and the electro-optic crystal structure are not melted. The melted dielectric layer can effectively bond the target structure and the electro-optic crystal structure together, thereby improving bonding strength between the target structure and the electro-optic crystal structure.

Further, any optical waveguide device provided in this application may further include a second optical waveguide, and the second optical waveguide is coupled to the first optical waveguide. Certainly, the optical waveguide device may not include the second optical waveguide. This is not limited in this application. Optionally, the second optical waveguide is located between the substrate and the insulation layer.

The first optical waveguide and the second optical waveguide are coupled in various manners. In a coupling manner, an orthographic projection of the first optical waveguide on the substrate and an orthographic projection of the second optical waveguide on the substrate at least partially overlap. An orthographic projection of an end that is of the first optical waveguide and that is close to the second optical waveguide on the substrate is wedge-shaped. An orthographic projection of an end that is of the second optical waveguide and that is close to the first optical waveguide on the substrate is wedge-shaped.

Optionally, modulation efficiency of the optical waveguide device may be represented by a product (Vπ·Lπ) of a half-wave voltage (Vπ) and a length (Lπ) of the electro-optic crystal structure in the extension direction of the first optical waveguide 022. A smaller product indicates higher modulation efficiency. Vπ·Lπ of the optical waveguide device provided in this application is small, and modulation efficiency of the optical waveguide device is high.

For example, a material of the first optical waveguide includes hydrogenated amorphous silicon, the electro-optic crystal structure includes a lithium niobate thin film, and Vπ·Lπ is less than 2.3 volt·centimeters; a material of the first optical waveguide includes silicon nitride, the electro-optic crystal structure includes a lithium niobate thin film, and Vπ·Lπ is less than 6.7 volt·centimeters; or a material of the first optical waveguide includes hydrogenated amorphous silicon, the electro-optic crystal structure includes barium titanate, and Vπ·Lπ is less than 0.2 volt·centimeters.

According to a second aspect, an optical chip is provided. The optical chip includes the optical waveguide device according to any design in the first aspect.

According to a third aspect, a communication device is provided. The communication device includes the optical chip provided in the second aspect.

According to a fourth aspect, a manufacturing method of an optical waveguide device is provided. The method includes: after an insulation layer is formed on a substrate, forming a first groove in a bonding region of the insulation layer, and embedding a first optical waveguide into the first groove. A surface that is of the first optical waveguide and that is away from the substrate is flush with a surface that is of the bonding region and that is away from the substrate. After a target structure located on the substrate is obtained, a side that is of the target structure and that is away from the substrate is boned to the electro-optic crystal structure. The target structure includes the insulation layer and the first optical waveguide.

When the insulation layer and the first optical waveguide are formed on the substrate, the insulation layer may be first formed on the substrate. For example, an insulation material layer is first formed on the substrate, and then chemical mechanical polishing (chemical mechanical polishing, CMP) processing is performed on the insulation material layer to obtain the insulation layer. Then, the first optical waveguide may be formed on a side that is of the insulation layer and that is away from the substrate by using an embedding process, so that the first optical waveguide is embedded into the bonding region of the insulation layer, and the surface that is of the first optical waveguide and that is away from the substrate is flush with the surface that is of the bonding region of the insulation layer and that is away from the substrate. When the first optical waveguide is formed on the side that is of the insulation layer and that is away from the substrate by using the embedding process, the first groove may be first formed in the bonding region of the insulation layer; then an optical waveguide material layer is formed on the substrate on which the first groove is formed; and finally CMP processing is performed on the optical waveguide material layer, to form the first optical waveguide embedded into the first groove. A material of the material layer of the optical waveguide may be hydrogenated amorphous silicon (hydrogenated amorphous silicon, a-Si:H), silicon nitride (SiN), titanium dioxide (TiO2), or the like.

Because the material of the optical waveguide material layer is different from a material of the insulation layer, when the CMP processing is performed on the optical waveguide material layer, a loss caused to the insulation layer is not large, and a part that is of the optical waveguide material layer and that is located outside the first groove can be effectively removed, so that the first optical waveguide whose surface is away from the substrate and is flush with the surface that is of the bonding region of the insulation layer and that is away from the substrate can be obtained. After the electro-optic crystal structure and the side that is of the target structure and that is away from the substrate are bonded, the insulation layer is not spaced between the first optical waveguide and the electro-optic crystal structure. In addition, in the manufacturing method of the optical waveguide device provided in this application, if the bonding between the target structure and the electro-optic crystal structure is the last manufacturing process of the optical waveguide device, the method may be compatible with a CMOS process.

Optionally, when the first optical waveguide is embedded into the first groove, a waveguide material layer may be first formed on the insulation layer on which the first groove is formed; and then CMP processing is performed on a surface that is of the waveguide material layer and that is away from the substrate, to obtain the first optical waveguide embedded into the first groove.

Optionally, a cross section of the first optical waveguide in an extension direction perpendicular to the first optical waveguide includes a first side and a second side that are opposite to each other, the first side is close to the substrate, the second side is away from the substrate, and a length of the first side is less than or equal to a length of the second side.

Optionally, the cross section further includes a third side, the third side is connected to the first side and the second side, and a range of an included angle between the third side and the second side is [60°, 80°].

Optionally, the electro-optic crystal structure includes a bulk electro-optic crystal or an electro-optic crystal thin film. Optional, the electro-optic crystal structure includes a support layer and the electro-optic crystal thin film that are superposed; and when the side that is of the target structure and that is away from the substrate is bonded to the electro-optic crystal structure, the side that is of the target structure and that is away from the substrate may be bonded to a side on which the electro-optic crystal thin film in the electro-optic crystal structure is located. After the side that is of the target structure and that is away from the substrate is bonded to the electro-optic crystal structure, the support layer may be further thinned or removed. Because the support layer is thinned or removed, a thickness of the entire optical waveguide device finally obtained is small, which facilitates subsequent packaging of the optical waveguide device.

Optionally, the method further includes: forming a plurality of second grooves in the bonding region, and embedding a plurality of electrodes into the plurality of second grooves in a one-to-one correspondence, where a surface that is of at least one electrode and that is away from the substrate is flush with the surface that is of the bonding region and that is away from the substrate, the target structure further includes the plurality of electrodes, the first optical waveguide is located between the plurality of electrodes, and the electrode and the first optical waveguide in the optical waveguide device are arranged one to one at spacings.

For example, when the plurality of electrodes are embedded into the plurality of second grooves in the one-to-one correspondence, a conductive material layer may be first formed on the insulation layer on which the plurality of second grooves are formed; and then CMP processing is performed on a surface that is of the conductive material layer and that is away from the substrate, to obtain the plurality of electrodes embedded into the plurality of second grooves in the one-to-one correspondence. Because a material of the conductive material layer is different from a material of the insulation layer, when CMP processing is performed on the conductive material layer, a loss caused to the insulation layer is not large, and a part that is of the conductive material layer and that is located outside the second groove can be effectively removed, so that the electrode whose surface is away from the substrate and is flush with the surface that is of the bonding region of the insulation layer and that is away from the substrate can be obtained.

Optionally, the forming a plurality of second grooves in the bonding region includes: forming the plurality of second grooves on the insulation layer into which the first optical waveguide is embedded. In this application, that the first optical waveguide is first formed and then the electrode is formed is used as an example. Certainly, the electrode may be formed first and then the first optical waveguide is formed.

Optionally, before the insulation layer is formed on the substrate, the electrode may be further formed on the substrate; and when the insulation layer is formed on the substrate, the insulation layer may be formed on the substrate on which the electrode is formed.

The electro-optic crystal structure includes the support layer and the electro-optic crystal thin film that are superposed, and the support layer includes a conductive material; and when the side that is of the target structure and that is away from the substrate is bonded to the electro-optic crystal structure, the side that is of the target structure and that is away from the substrate may be bonded to the side on which the electro-optic crystal thin film in the electro-optic crystal structure is located.

Optionally, a material of the electrode includes at least one of aluminum, tungsten, titanium, titanium nitride, and indium tin oxide.

Optionally, before the side that is of the target structure and that is away from the substrate is bonded to the electro-optic crystal structure, a dielectric layer may be formed on the insulation layer embedded with the first optical waveguide. The target structure further includes the dielectric layer, and the dielectric layer is configured to prevent metal ions in the electrode from diffusing to the electro-optic crystal structure.

Optionally, when the dielectric layer is formed on the insulation layer embedded with the first optical waveguide, the dielectric layer may be deposited on the insulation layer embedded with the first optical waveguide.

Optionally, a thickness of the dielectric layer is less than or equal to 10 nanometers.

Optionally, a melting point of the dielectric layer is lower than a melting point of the target structure and a melting point of the electro-optic crystal structure. When the target structure is bonded to the electro-optic crystal structure, the target structure, the dielectric layer, and the electro-optic crystal structure may be heated, so that the dielectric layer is melted, and the target structure and the electro-optic crystal structure are not melted.

Optionally, before the insulation layer is formed on the substrate, a second optical waveguide may be further formed on the substrate, and the first optical waveguide is coupled to the second optical waveguide. When the insulation layer is formed on the substrate, the insulation layer may be formed on the substrate on which the second optical waveguide is formed.

Optionally, an orthographic projection of the first optical waveguide on the substrate and an orthographic projection of the second optical waveguide on the substrate at least partially overlap. An orthographic projection of an end that is of the first optical waveguide and that is close to the second optical waveguide on the substrate is wedge-shaped. An orthographic projection of an end that is of the second optical waveguide and that is close to the first optical waveguide on the substrate is wedge-shaped.

Optionally, when the insulation layer is formed on the substrate, an insulation material layer may be first formed on the substrate; and then CMP processing is performed on a surface that is of the insulation material layer and that is away from the substrate, to obtain the insulation layer.

For the technical effects brought by any one of the designs in the second aspect to the fourth aspect, refer to the technical effects brought by a corresponding design in the first aspect. Details are not described herein again.

### BRIEF DESCRIPTION OF DRAWINGS

FIG. 1 is a schematic diagram of a structure of a communication device according to an embodiment of this application;
FIG. 2 is a schematic diagram of a structure of an optical chip according to an embodiment of this application;
FIG. 3 is a schematic diagram of another structure of an optical chip according to an embodiment of this application;
FIG. 4 is a schematic diagram of another structure of an optical chip according to an embodiment of this application;
FIG. 5 is a schematic diagram of a structure of an optical waveguide device according to an embodiment of this application;
FIG. 6 is a schematic diagram of another structure of an optical waveguide device according to an embodiment of this application;
FIG. 7 is a schematic diagram of another structure of an optical waveguide device according to an embodiment of this application;
FIG. 8 is a schematic diagram of a cross section of a first optical waveguide according to an embodiment of this application;
FIG. 9 is a schematic diagram of another structure of an optical waveguide device according to an embodiment of this application;
FIG. 10 is a schematic diagram of an implementation of an electrode according to an embodiment of this application;
FIG. 11 is a schematic diagram of another implementation of an electrode according to an embodiment of this application;
FIG. 12 is a top view of an optical waveguide device according to an embodiment of this application;
FIG. 13 is a schematic diagram of another structure of an optical waveguide device according to an embodiment of this application;
FIG. 14 is another top view of an optical waveguide device according to an embodiment of this application;
FIG. 15 is a schematic diagram of a cross section of an optical waveguide device according to an embodiment of this application;
FIG. 16 is another schematic diagram of a cross section of an optical waveguide device according to an embodiment of this application;
FIG. 17 is a schematic diagram of a projection manner according to an embodiment of this application;
FIG. 18 is a schematic diagram of orthographic projections of a first optical waveguide and a second optical waveguide on a substrate according to an embodiment of this application;
FIG. 19 is another top view of an optical waveguide device according to an embodiment of this application;
FIG. 20 is another schematic diagram of a cross section of an optical waveguide device according to an embodiment of this application;
FIG. 21 is another schematic diagram of a cross section of an optical waveguide device according to an embodiment of this application;
FIG. 22 is a flowchart of a manufacturing method of an optical waveguide device according to an embodiment of this application;
FIG. 23 is a schematic diagram of a manufacturing process of an optical waveguide device according to an embodiment of this application;
FIG. 24 is a schematic diagram of another manufacturing process of an optical waveguide device according to an embodiment of this application;
FIG. 25 is a schematic diagram of another manufacturing process of an optical waveguide device according to an embodiment of this application;
FIG. 26 is a schematic diagram of another manufacturing process of an optical waveguide device according to an embodiment of this application;
FIG. 27 is a schematic diagram of another manufacturing process of an optical waveguide device according to an embodiment of this application;
FIG. 28 is a schematic diagram of another manufacturing process of an optical waveguide device according to an embodiment of this application; and
FIG. 29 is a schematic diagram of another manufacturing process of an optical waveguide device according to an embodiment of this application.

### DESCRIPTION OF EMBODIMENTS

To make principles and technical solutions of this application clearer, the following further describes implementations of this application in detail with reference to the accompanying drawings.

A communication device usually performs communication by using light, and the communication device may be any device that uses light for communication, such as a router, a gateway, a base station, or a server.

The communication device includes an optical chip, for example, a photonic integrated circuit (photonic integrated circuit, PIC) or an electronic-photonic integrated circuit (electronic-photonic integrated circuit, EPIC). The optical chip can load an electrical signal onto the light by modulating a phase or intensity of the light.

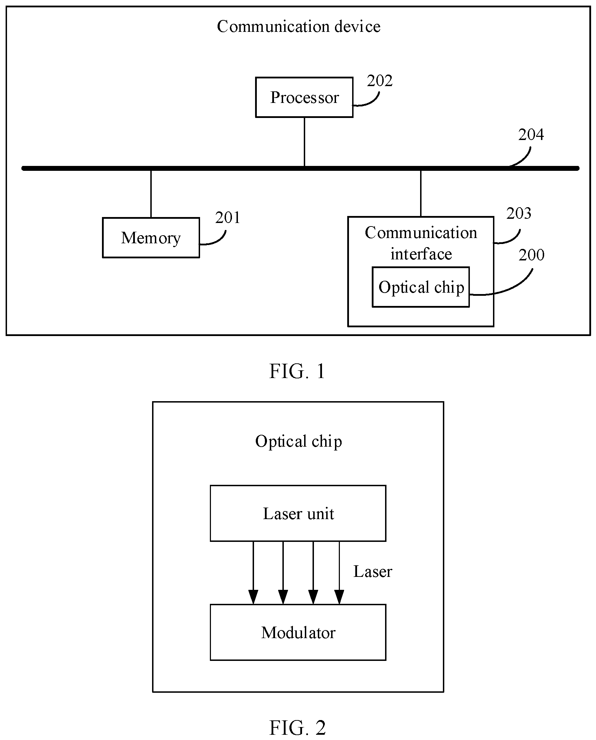

The communication device may further include another component in addition to the optical chip, such as a processor and a memory. The processor is configured to: after being coupled to the memory and reading instructions in the memory, perform, according to the instructions, the method that is performed by the communication device and that is described in embodiments of this application. In the communication device, there may be a plurality of processors, and the memory coupled to the processor may be independent of the processor or the communication device, or may be inside the processor or a network device. The memory may be a physically independent unit, or may be storage space, a web disk, or the like on a cloud server. Optionally, there may be one or more memories. When there are a plurality of memories, the plurality of memories may be located at a same location or different locations, and may be used independently or in cooperation. For example, when the memory is located inside the communication device, refer to FIG. 1. FIG. 1 is a schematic diagram of a structure of a communication device according to an embodiment of this application. The communication device includes an optical chip 200, a processor 202, and a memory 201. The memory 201 is configured to store a program, and the processor 202 is configured to invoke the program stored in the memory 201, so that the communication device performs a corresponding method or function. Optionally, as shown in FIG. 2, the communication device may further include at least one communication interface 203 and at least one communication bus 204. The memory 201, the processor 202, and the communication interface 203 are connected through the communication bus 204. The communication interface 203 is configured to communicate with another device under control of the processor 202, and the processor 202 may invoke, through the communication bus 204, the program stored in the memory 201. The communication interface 203 may include the optical chip 200.

The optical chip in the communication device may include an optical waveguide device configured to modulate a phase and/or intensity of light. Optionally, the optical waveguide device may further include another component in addition to the optical waveguide device.

For example, as shown in FIG. 2, the optical chip includes a laser unit and a modulator. The modulator is an optical waveguide device, for example, a Mach-Zehnder interferometer (Mach-Zehnder Interferometer, MZI) modulator. The laser unit is configured to emit a laser, and the modulator is configured to modulate a phase or brightness of the laser emitted by the laser unit.

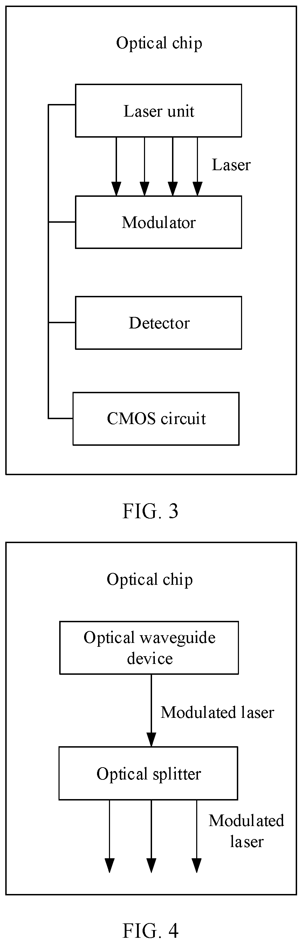

For another example, as shown in FIG. 3, based on FIG. 2, the optical chip further includes a CMOS circuit and a detector. The modulator modulates the laser emitted by the laser unit into an optical signal, and then outputs the optical signal to the optical chip. The detector is configured to convert the optical signal received by the optical chip into an electrical signal. The COMS circuit is connected to the laser unit, the modulator, and the detector. The COMS circuit is configured to control the laser unit to emit light and send an electrical signal to the modulator, so that the modulator modulates, based on the electrical signal, the laser emitted by the laser unit, and process the electrical signal obtained through conversion by the detector. Optionally, the optical chip may further include another detector (not shown in FIG. 3). The detector is also connected to the CMOS circuit. The detector is configured to convert an optical signal modulated by the modulator into an electrical signal. The COMS circuit may be configured to detect, based on the electrical signal, effect of modulating the laser by the modulator.

For still another example, as shown in FIG. 4, the optical chip includes an optical waveguide device and a passive device. The passive device may be a coupler, an optical splitter, an optical combiner, or the like. In FIG. 4, that the passive device is the optical splitter is used as an example. In FIG. 4, the optical splitter is configured to divide a modulated laser light output by the optical waveguide device into three modulated laser light beams.

It can be learned from the foregoing content that the optical waveguide device is one of key devices in the optical chip, and the optical waveguide device may be any device including an optical waveguide, such as an optical modulator, an optical switch, or an optical phased array. The optical waveguide device modulates light by using an optical waveguide in the optical waveguide device. Currently, the optical waveguide in the optical waveguide device may be a silicon optical waveguide. The silicon optical waveguide modulates light by using carrier dispersion effect of silicon. The carrier dispersion effect is a phenomenon that a change of an injected carrier causes a refractive index change of a material (for example, the silicon optical waveguide).

It should be noted that the optical chip usually features a high modulation bandwidth, a low modulation voltage, a small insertion loss, good linearity, low power consumption, easy integration, and the like. However, the silicon optical waveguide modulates the light by using the carrier dispersion effect of silicon. The carrier dispersion effect not only changes the refractive index of the silicon optical waveguide, but also changes a light absorption coefficient of the silicon optical waveguide. As a result, the optical waveguide device has problems such as a large insertion loss, low extinction, and difficulty in further improving a modulation bandwidth. Consequently, performance of the optical waveguide device and the optical chip in which the optical waveguide device is located is poor.

To improve performance of the optical waveguide device and the optical chip, an electro-optic material with a larger electro-optic coefficient (also referred to as a Pockels (Pockels) coefficient) (greater than an electro-optic coefficient of the optical waveguide) may be mixed in the optical waveguide device, for example, a lithium niobate (LiNbO3, LN) crystal, a barium titanate (BaTiO3, BTO) crystal, a potassium niobate (KNbO3, KBO) crystal, organic electro-optic materials, and the like.

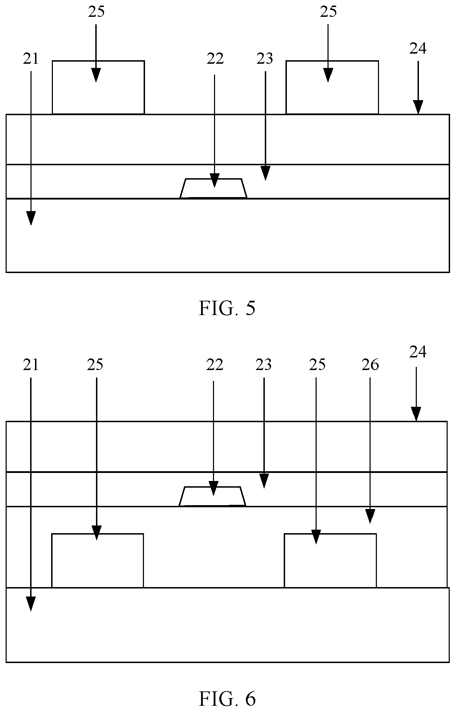

For example, FIG. 5 is a schematic diagram of a structure of an optical waveguide device according to an embodiment of this application. As shown in FIG. 5, the optical waveguide device includes a substrate 21, an optical waveguide 22, an insulation layer 23, and an electro-optic crystal 24. The optical waveguide 22 is located on the substrate 21, the insulation layer 23 covers the optical waveguide 22, and a side that is of the insulation layer 23 and that is away from the substrate is bonded to the electro-optic crystal 24.

When the optical waveguide device shown in FIG. 5 is manufactured, the optical waveguide 22 is usually first formed on the substrate 21; then an insulation material layer covering the optical waveguide 22 is formed on the substrate 21 on which the optical waveguide 22 is formed, and CMP processing is performed on the insulation material layer to obtain the insulation layer 23; and finally the electro-optic crystal 24 is bonded to the side that is of the insulation layer 23 and that is away from the substrate 21.

An objective of the foregoing CMP processing is to remove a part that is in the insulation material layer and that is beyond the optical waveguide. However, when the CMP processing is performed on the insulation material layer, a large loss is easily caused to a part that is in the insulation material layer and that is not beyond the optical waveguide, and consequently the optical waveguide 22 protrudes from the insulation layer 23. Therefore, to prevent the optical waveguide 22 from protruding from the insulation layer 23, when the CMP processing is performed on the insulation material layer, the part that is in the insulation material layer and that is beyond the optical waveguide 22 needs to be reserved. In this way, the insulation layer 23 obtained through the CMP processing covers the optical waveguide 22. After the electro-optic crystal 24 and the side that is of the insulation layer 23 and that is away from the substrate 21 are bonded, the insulation layer 23 is spaced between the optical waveguide 22 and the electro-optic crystal 24.

A distance between the optical waveguide 22 and the electro-optic crystal 24 is negatively related to light modulation efficiency of the optical waveguide device. When there is a spacing between the optical waveguide 22 and the electro-optic crystal 24, the distance between the optical waveguide 22 and the electro-optic crystal 24 cannot be too small (for example, the distance is 1.148 micrometers or 30 nanometers). As a result, an overall optical mode field formed by the optical waveguide and the electro-optic crystal is large, and light modulation efficiency of the optical waveguide device is low.

Further, as shown in FIG. 5, the optical waveguide device further includes an electrode 25, and the electrode 25 is located on a side that is of the electro-optic crystal 24 and that is away from the substrate 21. An entirety formed by the optical waveguide 22 and the electro-optic crystal 24 is configured to modulate light under an action of an electric field formed by the electrode 25. In this case, in a process of manufacturing the optical waveguide device, after the side that is of the insulation layer 23 and that is away from the substrate 21 is bonded to the electro-optic crystal 24, the electrode 25 may be formed on the side that is of the electro-optic crystal 24 and that is away from the substrate 21.

However, because the bonding process does not belong to a CMOS process, an entire process of preparing the optical waveguide device cannot be completely completed on a flow plate platform of the CMOS process. If the optical waveguide device is prepared by combining the CMOS process and the bonding process, the optical waveguide 22 and the insulation layer 23 may be first formed on the substrate on the flow plate platform of the CMOS process, then the substrate 21 on which the insulation layer 23 is formed is removed from the flow plate platform of the CMOS process, and the insulation layer 23 and the electro-optic crystal 24 are bonded by using the bonding process. However, after the insulation layer 23 and the electro-optic crystal 24 are bonded, because the insulation layer 23 is currently detached from the flow plate platform of the CMOS process, the electrode 25 cannot be formed on the flow plate platform. It can be learned that the optical waveguide device shown in FIG. 5 cannot be prepared by combining the CMOS process and the bonding process, and a manufacturing method of the optical waveguide device is incompatible with the CMOS process.

In addition, a location of the electrode 25 in the optical waveguide device may also be different from that in FIG. 5. As shown in FIG. 6, the electrode 25 may be located between the optical waveguide 22 and the substrate 21. In this case, the optical waveguide device further includes another insulation layer 26 located between the electrode 25 and the optical waveguide 22. In addition, similar to the foregoing location relationship between the insulation layer 23 and the optical waveguide 22, the another insulation layer 26 also covers the electrode 25. In this case, in a process of manufacturing the optical waveguide device, before the optical waveguide 22 is formed on the substrate 21, the electrode 25 and the insulation layer 26 need to be sequentially formed on the substrate 21, and then the optical waveguide 22 is formed on the insulation layer 26.

It should be noted that, because a distance between the electrode 25 and the electro-optic crystal 24 is negatively related to light modulation efficiency of the optical waveguide device, in the optical waveguide device shown in FIG. 6, the insulation layer 26, the optical waveguide 22, and the insulation layer 25 are spaced between the electrode 25 and the electro-optic crystal 24. It can be learned that the distance between the electrode 25 and the electro-optic crystal 24 cannot be too small. As a result, an electric field of the electrode 25 applied to the electro-optic crystal 24 is low, and light modulation efficiency of the optical waveguide device is low.

In some cases, a material of the electrode 25 is gold. If the electrode 25 is also prepared on the flow plate platform of the CMOS process, in a process of preparing the electrode 25, a residue of gold is likely to remain on the flow plate platform. Because the residue of gold has great impact on performance of another device prepared on the flow plate platform of the CMOS process, the material gold is difficult to be compatible with the CMOS process.

In the foregoing several optical waveguide devices (the optical waveguide device shown in FIG. 5 or FIG. 6), the optical waveguide 22 is formed in a dry etching manner. As a result, the optical waveguide 22 is an inverted trapezoid in a cross section perpendicular to an extension direction of the optical waveguide 22, and a length of a first side that is in the cross section and that is close to the substrate (away from the electro-optic crystal) is greater than a length of a second side that is in the cross section and that is away from the substrate (away from the electro-optic crystal). The cross section shown in FIG. 5 or FIG. 6 is a regular trapezoid. However, it can be learned through experiments that a greater length of the second side than the length of the first side indicates higher light modulation efficiency of the optical waveguide device. Because the length of the second side is less than the length of the first side in the foregoing several optical waveguide devices, light modulation efficiency of the several optical waveguide devices is low.

In addition, when the electro-optic crystal in the foregoing optical waveguide device is a barium titanate thin film formed on a support layer, because an electro-optic coefficient of 1000 picometers per volt (pm/V) of the barium titanate thin film is small (less than an electro-optic coefficient of 1920 pm/V of a bulk barium titanate), light modulation efficiency of the entirety formed by the optical waveguide and the electro-optic crystal is low, and light modulation efficiency of the optical waveguide device is low.

Based on the foregoing problems, embodiments of this application provide an optical waveguide device and a manufacturing method thereof. In the optical waveguide device, a surface that is of an optical waveguide and that is away from a substrate is flush with a surface that is of an insulation layer and that is away from the substrate (that is, the insulation layer does not cover the optical waveguide); a surface that is of an electrode and that is away from the substrate may also be flush with a surface that is of the insulation layer and that is away from the substrate (that is, the insulation layer does not cover the electrode); and a length of a second side in a cross section of the optical waveguide may be greater than or equal to a length of the first side. In addition, when an electro-optic coefficient of a bulk electro-optic crystal of a material is greater than an electro-optic coefficient of an electro-optic crystal thin film of the material, an electro-optic crystal structure in the optical waveguide device may include the bulk electro-optic crystal with the higher electro-optic coefficient. In this way, light modulation efficiency of the optical waveguide device is high. In addition, in the manufacturing method of the optical waveguide device, the electro-optic crystal structure is finally bonded, and a material of the electrode in the optical waveguide device may be tungsten that has less impact on performance of another device. Therefore, the manufacturing method of the optical waveguide device may also be compatible with the CMOS process.

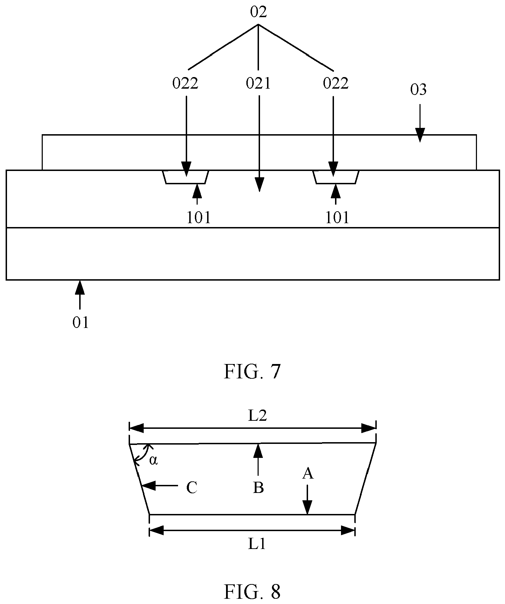

For example, FIG. 7 is a schematic diagram of another structure of an optical waveguide device according to an embodiment of this application. As shown in FIG. 7, the optical waveguide device includes a substrate 01, a target structure 02, and an electro-optic crystal structure 03. The target structure 02 includes an insulation layer 021 and a first optical waveguide 022.

A bonding region of the insulation layer 021 has a first groove 101 (also referred to as a first via hole). It should be noted that FIG. 7 shows only the bonding region of the insulation layer 021. The bonding region may be an entire region of the insulation layer 021, or may be a part of region of the insulation layer 021. This is not limited in this embodiment of this application. When the bonding region is the part of region of the insulation layer 021, a form of the other part of region of the insulation layer 021 is not limited in this embodiment of this application.

The first optical waveguide 022 in the target structure 02 is embedded into the first groove 101 in the bonding region of the insulation layer 021, and a surface that is of the first optical waveguide 022 and that is away from the substrate 01 is flush with a surface that is of the bonding region of the insulation layer 021 and that is away from the substrate 01. It can be learned that the insulation layer 021 does not cover the side that is of the first optical waveguide 022 and that is away from the substrate.

The electro-optic crystal structure 03 is bonded to a side that is of the target structure 02 and that is away from the substrate 01. The bonding region of the insulation layer 021 is located in a region that is in the target structure 02 and that is bonded to the electro-optic crystal structure 02. Therefore, that the electro-optic crystal structure 03 is bonded to the side that is of the target structure 02 and that is away from the substrate 01 may be understood as that the electro-optic crystal structure 03 is bonded to a region in which the bonding region is located on the side that is of the target structure 02 and that is away from the substrate 01. A material of the electro-optic crystal structure 03 may be any electro-optic crystal, for example, lithium niobate, barium titanate, or potassium niobate.

A quantity of first optical waveguides 022 is not limited in this embodiment of this application. In FIG. 7, that the target structure 02 includes two first optical waveguides 022 is used as an example. Optionally, the target structure 02 may alternatively include one first optical waveguide 022, three first optical waveguides 022, or the like. A quantity of first grooves 101 may be equal to the quantity of first optical waveguides 022, and one first optical waveguide 022 is embedded into each first groove 101.

Because the surface that is of the first optical waveguide 022 and that is away from the substrate 01 is flush with the surface that is of the bonding region of the insulation layer 021 and that is away from the substrate 01, a side that is of the first optical waveguide 022 and that is away from the substrate 01 is not covered by the insulation layer 021. Therefore, there is no insulation layer 021 between the first optical waveguide 022 and the electro-optic crystal structure 03, and a distance between the first optical waveguide 022 and the electro-optic crystal structure 03 is small. In addition, because the distance between the first optical waveguide 022 and the electro-optic crystal structure 03 is negatively correlated with light modulation efficiency of the optical waveguide device, when the distance between the first optical waveguide 022 and the electro-optic crystal structure 03 is small, an entire optical mode field formed by the optical waveguide and the electro-optic crystal is small, and light modulation efficiency of the optical waveguide device is high.

When the insulation layer 021 and the first optical waveguide 022 are formed on the substrate 01, the insulation layer 021 may be first formed on the substrate 01. For example, an insulation material layer is first formed on the substrate 01, and then CMP processing is performed on the insulation material layer to obtain the insulation layer 02. Then, the first optical waveguide 022 may be formed on a side that is of the insulation layer 021 and that is away from the substrate 01 by using an embedding process, so that the first optical waveguide 022 is embedded into the bonding region of the insulation layer 021, and the surface that is of the first optical waveguide 022 and that is away from the substrate 01 is flush with the surface that is of the bonding region of the insulation layer 021 and that is away from the substrate 01. When the first optical waveguide 022 is formed on the side that is of the insulation layer 021 and that is away from the substrate 01 by using the embedding process, the first groove 101 may be first formed in the bonding region of the insulation layer 021; then an optical waveguide material layer is formed on the substrate 01 on which the first groove 101 is formed; and finally CMP processing is performed on the optical waveguide material layer, to form the first optical waveguide 022 embedded into the first groove 101. A material of the optical waveguide material layer may be a-Si:H, SiN, TiO2, or the like.

Because the material of the optical waveguide material layer is different from a material of the insulation layer 021, when the CMP processing is performed on the optical waveguide material layer, a loss caused to the insulation layer 021 is not large, and a part that is of the optical waveguide material layer and that is located outside the first groove 101 can be effectively removed, so that the first optical waveguide 022 whose surface is away from the substrate 01 and is flush with the surface that is of the bonding region of the insulation layer 021 and that is away from the substrate 01 can be obtained. After the electro-optic crystal structure 03 and the side that is of the target structure and that is away from the substrate 01 are bonded, the insulation layer 021 is not spaced between the first optical waveguide 022 and the electro-optic crystal structure 03.

It should be noted that the optical waveguide device provided in this embodiment of this application may further include a structure other than the structure shown in FIG. 7. This is not limited in this embodiment of this application. For example, a circuit layer or the like may further exist between the substrate 01 and the insulation layer 021 in FIG. 7. Before a part other than the substrate 01 in the optical waveguide device is prepared, another structure may be formed on the substrate 01 by using a precursor process in a CMOS process. In addition, the substrate 01 herein may be any substrate, such as a silicon substrate or a silicon nitride substrate.

Further, a cross section of the first optical waveguide 022 in an extension direction perpendicular to the first optical waveguide 022 may be shown in FIG. 8. The cross section includes a first side A and a second side B that are opposite to each other. The first side A is close to the substrate 01, and the second side B is away from the substrate 02. A length L1 of the first side A is less than or equal to a length L2 of the second side B. In FIG. 8, that the length L1 of the first side A is less than the length L2 of the second side B is used as an example (this cross section in FIG. 8 is an inverted trapezoid). Optionally, the length L1 of the first side A may be equal to the length L2 of the second side B (in this case, the cross section is a rectangular). Because greater the length of the second side B than the length of the first side A indicates higher light modulation efficiency of the optical waveguide device, when the length L1 of the first side A is less than or equal to the length L2 of the second side B, light modulation efficiency of the optical waveguide device is high.

To make the length of the first side A be less than or equal to the length of the second side B, the first groove 101 that needs to be formed on the insulation layer 021 may be designed, so that the first groove 101 is on a cross section in an extension direction of the first groove 101 (parallel to the extension direction of the first optical waveguide 022), and a length of a side on which the bottom surface of the first groove 101 is located is less than or equal to a length of a side on which the opening surface of the first groove 101 is located. In this way, after the first optical waveguide 022 is formed on the substrate on which the first groove 101 is formed, the first optical waveguide 022 whose length of the first side A is less than or equal to the length of the second side B can be obtained.

Continue to refer to FIG. 8. The cross section of the first optical waveguide 022 in the extension direction perpendicular to the first optical waveguide 022 further includes a third side C, and the third side C is connected to the first side A and the second side B. When the length L1 of the first side A is less than the length L2 of the second side B, a range of an included angle α between the third side C and the second side B may be [60°, 80°] or [70°, 80°]. For example, the included angle α may be 70 degrees. When the length L1 of the first side A is less than the length L2 of the second side B, the included angle α between the third side C and the second side B is equal to 90°. When the range of the included angle α is [60°, 80°] or [70°, 80°], and the length of the second side B is greater than the length of the first side A, light modulation efficiency of the optical waveguide device is high.

The electro-optic crystal structure 03 in this embodiment of this application has various forms. For example, the electro-optic crystal structure 03 may include a bulk electro-optic crystal or an electro-optic crystal thin film. For example, the electro-optic crystal structure 03 includes a lithium niobite thin film, bulk lithium niobate, a barium titanate thin film, bulk barium titanate, bulk potassium niobate, and the like. For some electro-optic crystals (such as barium titanate), an electro-optic coefficient of a bulk electro-optic crystal is higher than an electro-optic coefficient of an electro-optic crystal thin film. In this case, if the bulk electro-optic crystal of the electro-optic crystal is used as the foregoing electro-optic crystal structure 03, an electro-optic coefficient of the electro-optic crystal structure may be high, and light modulation efficiency of the optical waveguide device is high.

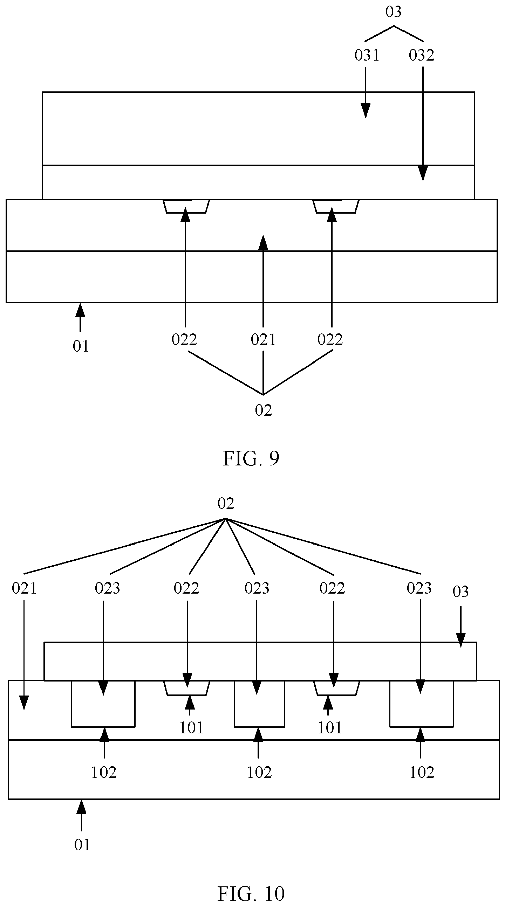

Optionally, when the electro-optic crystal structure 03 includes the electro-optic crystal thin film, as shown in FIG. 9, on the basis of the optical waveguide device shown in FIG. 7, the electro-optic crystal structure 03 includes a support layer 031 and the electro-optic crystal thin film 032 that are superposed, and the side that is of the target structure 02 and that is away from the substrate 01 is bonded to a side on which the electro-optic crystal thin film 032 in the electro-optic crystal structure 03 is located. The support layer 031 is located on a side that is of the electro-optic crystal thin film 032 and that is away from the substrate 01. Before the electro-optic crystal structure 03 is bonded to the target structure 02, the electro-optic crystal thin film 032 is located on the support layer 031, and the support layer 031 is configured to support the electro-optic crystal thin film 032.

It should be noted that the support layer 031 may be a single-layer structure, or may be a multi-layer structure. This is not limited in this embodiment of this application. For example, when the support layer 032 is the multi-layer structure, the support layer 032 includes a silicon substrate and a silicon dioxide layer that are superimposed, and the electro-optic crystal thin film 032 may be superimposed on a side that is of the silicon dioxide layer and that is away from the silicon substrate.

It should be further noted that, when the electro-optic crystal structure 03 includes the electro-optic crystal thin film, the electro-optic crystal structure 03 may also include only the electro-optic crystal thin film 032, and does not include the support layer 031. In this case, after the side on which the electro-optic crystal thin film 032 in the electro-optic crystal structure 03 is bonded to the target structure 02, the support layer 031 in the electro-optic crystal structure 03 may further be removed. Alternatively, the electro-optic crystal structure 03 may also include the electro-optic crystal thin film 032 and the support layer 031, and a thickness of the support layer 031 is less than a thickness of the support layer used to support the electro-optic crystal thin film 032 before bonding. In this case, after the side of the electro-optic crystal thin film 032 in the electro-optic crystal structure 03 is bonded to the target structure 02, the support layer originally used to support the electro-optic crystal thin film 032 may be thinned, to obtain the support layer 031.

When the electro-optic crystal structure 03 does not include the support layer 031 or includes a thinner support layer 031, a thickness of the entire optical waveguide device is small, which facilitates subsequent packaging of the optical waveguide device.

Further, the optical waveguide 022 and the electro-optic crystal structure 03 in the optical waveguide device can modulate light under an action of an electric field. Therefore, the optical waveguide device provided in this embodiment of this application may further include an electrode configured to form the electric field. It should be noted that there are various implementations of the electrode in the optical waveguide device, and the following uses two of the implementations as an example for description.
(1) An implementation of the electrode may be shown in FIG. 10. Refer to FIG. 10. Based on FIG. 7, the bonding region further has a plurality of second grooves 102 (also referred to as second vias), and the target structure 02 further includes a plurality of electrodes 023 embedded into the plurality of second grooves 102 in a one-to-one correspondence, the first optical waveguide 022 is located between the plurality of electrodes 023, and the electrodes 023 in the optical waveguide device and the first optical waveguide 022 are arranged one to one at spacings.

For example, the target structure 02 includes two first optical waveguides 022, the bonding region has three second grooves 102 that are sequentially arranged, the target structure 02 includes three electrodes 023 that are embedded into the three grooves 102 in a one-to-one correspondence, and one first optical waveguide 022 is arranged between every two adjacent electrodes 023. An electrode 023 located in the middle of the three electrodes 023 can access an electric signal, and two electrodes 023 on the two sides can be grounded. In this way, an electric field is formed between every two adjacent electrodes. The electro-optic crystal structure 03 and the first optical waveguide 022 located between the every two electrodes can modulate light under an action of the electric field. The electrode 023 that is grounded in the middle may be represented as S, and the two electrodes 023 on the two sides may be represented as G. Therefore, the three electrodes 023 shown in FIG. 10 form a GSG electrode structure.

It should be noted that in this embodiment of this application, that the target structure 02 includes three electrodes 023 is used as an example. Alternatively, a quantity of electrodes 023 in the target structure 02 may not be three. For example, the target structure 02 includes two electrodes 023. In this case, the target structure 02 may include one first optical waveguide 022 located between the two electrodes 023.

Optionally, in the plurality of electrodes 023, a surface that is away from the substrate 01 and that is of at least one electrode 023 is flush with a surface that is of the bonding region of the insulation layer 021 and that is away from the substrate 01. In FIG. 10, that surfaces that are of the plurality of electrodes 023 and that are away from the substrate 01 are flush with the surface that is of the bonding region of the insulation layer 021 and that is away from the substrate 01 is used as an example.

When a surface that is of the electrode 023 and that is away from the substrate 01 is flush with the surface that is of the bonding region of the insulation layer 021 and that is away from the substrate 01, a side that is of the electrode 023 and that is away from the substrate 01 is not covered by the insulation layer 021. Therefore, there is no insulation layer 021 between the electrode 023 and the electro-optic crystal structure 03, and a distance between the electrode 023 and the electro-optic crystal structure 03 is small. In addition, because the distance between the electrode 023 and the electro-optic crystal structure 03 is negatively correlated with light modulation efficiency of the optical waveguide device, when the distance between the electrode 023 and the electro-optic crystal structure 03 is small, light modulation efficiency of the optical waveguide device is high.

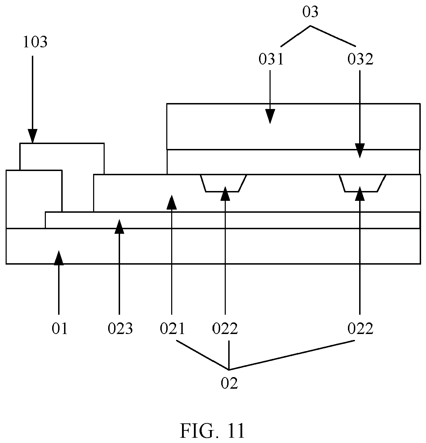

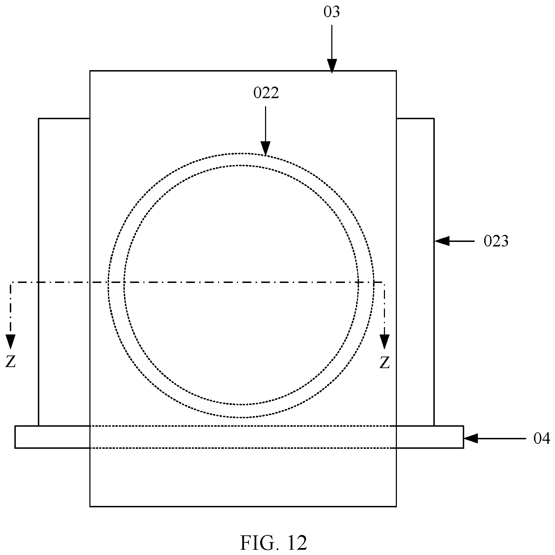

(2) Another possible implementation of the electrode may be shown in FIG. 11. FIG. 11 is a schematic diagram of a cross section ZZ in FIG. 12. FIG. 12 does not show the substrate 01, the connecting part 103, and the insulation layer 021 in FIG. 11. Refer to FIG. 11. On the basis of FIG. 7, the optical waveguide device further includes an electrode 023, and the electrode 023 is located between the substrate 01 and the insulation layer 021. In this case, the electro-optic crystal structure 03 includes a support layer 031 and an electro-optic crystal thin film 032 that are superposed, and the support layer 031 includes a conductive material. A side that is of the target structure 02 and that is away from the substrate 01 is bonded to a side on which the electro-optic crystal thin film 032 of the electro-optic crystal structure 03 is located.

In the optical waveguide device shown in FIG. 11, an electric field may be formed between the electrode 023 and the support layer 031. Both the first optical waveguide 022 and the electro-optic crystal structure 03 are located in the electric field, and light modulation is performed under an action of the electric field.

For example, refer to FIG. 11. The optical waveguide device further includes a connecting part 103, and the connecting part 103 is located on a surface that is of the insulation layer 021 and that is away from the substrate 01. In addition, the connecting part 103 is electrically conductive, and the connecting part 103 is connected to the electrode 023 through a via in the insulation layer 021. When an electric signal is applied to the electrode 203, the electric signal may be applied to the electrode 203 through the connecting part 103.

It should be noted that the support layer 031 may be a single-layer structure, or may be a multi-layer structure. If the support layer 031 includes a conductive material, when the support layer 031 is the single-layer structure, all materials of the single-layer structure are conductive materials; or when the support layer 031 is the multi-layer structure, all materials of the multi-layer structure may include conductive materials, or materials of one or more layers that are of the multi-layer structure and that are away from the electro-optic crystal thin film 032 may include conductive materials, and another layer structure other than these layer structures includes an insulation material. The conductive material in the support layer 031 may be metal, or may be silicon with a high doping degree, or the like.

In this embodiment of this application, regardless of the implementation of the electrode 023, a material of the electrode 023 may include at least one of aluminum, tungsten, titanium, titanium nitride, and indium tin oxide. In addition, when the material of the electrode 023 is tungsten, if the electrode 023 is also prepared on a flow plate platform of a CMOS process, in a process of preparing the electrode, because a residue of tungsten has little impact on performance of another device prepared on the flow plate platform of the CMOS process, if the residue of tungsten remains on the platform, the material tungsten can be better compatible with the CMOS process.

That the bonding region of the insulation layer 021 is in direct contact with the electro-optic crystal structure 03 is used as an example in the foregoing embodiments. Optionally, there may be another film layer between the bonding region of the insulation layer 021 and the electro-optic crystal structure 03. For example, there may be a dielectric layer between the bonding region of the insulation layer 021 and the electro-optic crystal structure 02. The dielectric layer is configured to prevent metal ions on a side on which the insulation layer 021 is located from diffusing to the electro-optic crystal structure 03, to avoid performance deterioration of the electro-optic crystal structure 03 caused by diffusion of the metal ions on the side on which the insulation layer 021 is located to the electro-optic crystal structure 03. The metal ions may be metal ions in the electrode 023 when the material of the electrode 023 includes a metal material. A material of the dielectric layer may be aluminum oxide (Al₂O₃), aluminum nitride (AlN), BCB (benzocyclobutene), or the like.

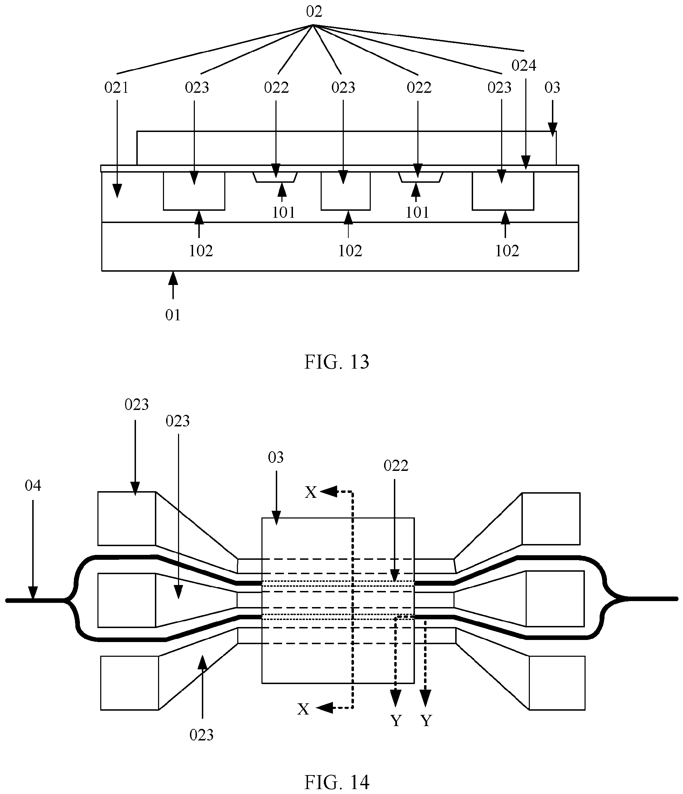

For example, as shown in FIG. 13, based on the optical waveguide device shown in FIG. 10, the target structure 02 further includes a dielectric layer 024, and the dielectric layer 024 is located between the bonding region of the insulation layer 021 and the electro-optic crystal structure 03. The dielectric layer 024 is configured to prevent metal ions in the electrode 023 from diffusing to the electro-optic crystal structure 03, to avoid performance deterioration of the electro-optic crystal structure 03 caused by diffusion of the metal ions in the electrode 023 to the electro-optic crystal structure 03.

It should be noted that a thickness of the dielectric layer 024 is not limited in this embodiment of this application. Optionally, the thickness of the dielectric layer 024 is less than or equal to 10 nanometers. For example, the thickness of the dielectric layer 024 ranges from 2 nanometers to 10 nanometers. It can be learned that the thickness of the dielectric layer 024 is small, the distance between the first optical waveguide 022 and the electro-optic crystal structure 03 is small, the distance between the electrode 023 and the electro-optic crystal structure 03 is also small, and light modulation efficiency of the entire optical waveguide device is high.

The dielectric layer 024 may be prepared by depositing (for example, atomic layer deposition (ALD)) a dielectric material. When the thickness of the dielectric layer 024 is less than or equal to 10 nanometers, because the thickness of the dielectric layer 024 is small, after the dielectric layer 024 is obtained by depositing the dielectric material, a surface that is of the dielectric layer 024 and that is away from the substrate 01 is flat, and CMP processing does not need to be performed on the dielectric layer 024. Optionally, when the thickness of the dielectric layer 024 is greater than 10 nanometers, after the dielectric layer 024 is obtained, the CMP processing may be further performed on the dielectric layer 024, to facilitate subsequent bonding to the electro-optic crystal structure 03.

Optionally, a melting point of the dielectric layer 024 is lower than a melting point of the target structure 02 and a melting point of the electro-optic crystal structure 03. It should be noted that the target structure 02 includes a plurality of parts, and the melting point of the target structure 02 may be a melting point of a part that is in the plurality of parts and that is bonded to the electro-optic crystal structure 03. The melting point of the electro-optic crystal structure 03 may be a melting point of a part that is in the electro-optic crystal structure 03 and that is bonded to the target structure 02.

Because the melting point of the dielectric layer 024 is lower than the melting point of the target structure 02 and the melting point of the electro-optic crystal structure 03, when the target structure 02 is bonded to the electro-optic crystal structure 03, the target structure 02, the dielectric layer 024, and the electro-optic crystal structure 03 may be heated as a whole, so that the dielectric layer 024 is melted, and the target structure 02 and the electro-optic crystal structure 03 are not melted. The melted dielectric layer 024 can effectively bond the target structure 02 and the electro-optic crystal structure 03 together, thereby improving bonding strength between the target structure 02 and the electro-optic crystal structure 03.

Further, any optical waveguide device provided in this embodiment of this application may further include a second optical waveguide, and the second optical waveguide is coupled to the first optical waveguide 022. Certainly, the optical waveguide device may not include the second optical waveguide. This is not limited in this embodiment of this application.

For example, refer to FIG. 12. The optical waveguide device further includes a second optical waveguide 04, and the second optical waveguide 04 is coupled to the first optical waveguide 022.

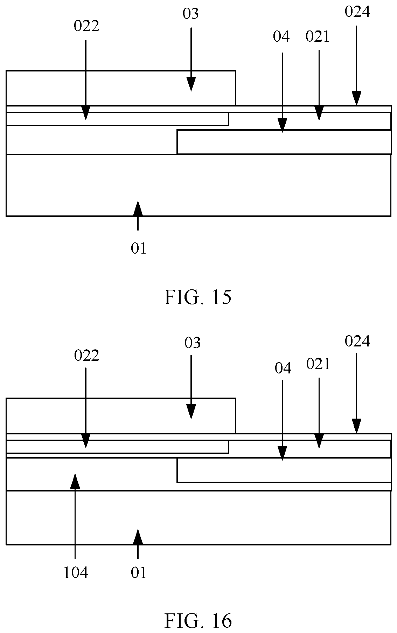

For another example, with reference to FIG. 13, FIG. 14, and FIG. 15, FIG. 14 is a top view of the optical waveguide device (a view of the substrate from the electro-optic crystal structure). FIG. 13 is a schematic diagram of a cross section XX in FIG. 14. FIG. 15 is a schematic diagram of a cross section YY in FIG. 14. FIG. 14 does not show the substrate 01, the insulation layer 021, and the dielectric layer 024. The optical waveguide device shown in FIG. 14 is an optical waveguide device of a Mach-Zehnder structure. Alternatively, the optical waveguide device provided in this embodiment of this application may not be the optical waveguide device of the Mach-Zehnder structure, for example, may be a push-pull optical waveguide device. This is not limited in this embodiment of this application. With reference to FIG. 13, FIG. 14, and FIG. 15, it can be learned that the optical waveguide device further includes a second optical waveguide 04, and the second optical waveguide 04 is located between the substrate 01 and the insulation layer 021.

A method for preparing the second optical waveguide 04 may be the same as or different from a method for preparing the first optical waveguide 022. For example, when the second optical waveguide is prepared, the second optical waveguide 04 is directly formed on the substrate 01. Then, the insulation layer 021 is formed on the substrate 01 on which the second optical waveguide 04 is formed. Alternatively, as shown in FIG. 16, an auxiliary layer 104 may further exist between the second optical waveguide 04 and the substrate 01, and a material of the auxiliary layer 104 may be the same as or different from a material of the insulation layer 021. Before forming the second optical waveguide 04, the auxiliary layer 104 is first formed on the substrate 01, and then the second optical waveguide 04 is embedded on a surface that is of the auxiliary layer 104 and that is away from the substrate 01 by using an embedding process. Then, the insulation layer 021 is formed on the substrate 01 on which the second optical waveguide 04 is formed.

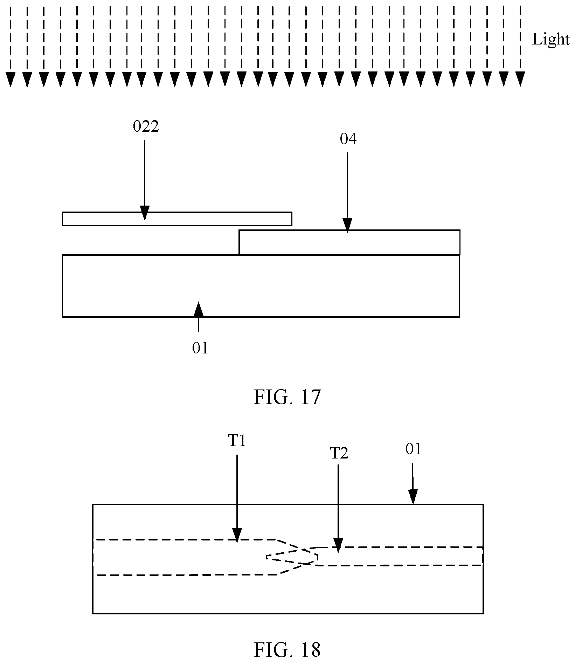

Further, the first optical waveguide 022 is coupled to the second optical waveguide 04. For example, an orthographic projection of the first optical waveguide 022 on the substrate 01 and an orthographic projection of the second optical waveguide 04 on the substrate 01 at least partially overlap. As shown in FIG. 17, the orthographic projection of the first optical waveguide 022 on the substrate 01 is a projection T1 formed on the substrate 01 (as shown in FIG. 18) after light passes through the first optical waveguide 022 by irradiating the light perpendicular to the substrate 01 to the substrate 01 from a side that is of the first optical waveguide 022 and that is away from the substrate 01. The orthographic projection of the second optical waveguide 04 on the substrate 01 is a projection T2 formed on the substrate 01 (as shown in FIG. 18) after light passes through the second optical waveguide 04 by irradiating the light perpendicular to the substrate 01 to the substrate 01 from a side that is of the second optical waveguide 04 and that is away from the substrate 01. An orthographic projection of an end that is of the first optical waveguide 022 and that is close to the second optical waveguide 04 on the substrate 01 is wedge-shaped (that is, an end that is of the orthographic projection T1 and that is close to the orthographic projection T2 in FIG. 18 is wedge-shaped). An orthographic projection of an end that is of the second optical waveguide 04 and that is close to the first optical waveguide 022 on the substrate 01 is wedge-shaped (that is, an end that is of the orthographic projection T2 and that is close to the orthographic projection T1 in FIG. 18 is wedge-shaped).

Certainly, the first optical waveguide 022 and the second optical waveguide 04 may also be coupled in another manner. This is not limited in this embodiment of this application. For example, the first optical waveguide 022 and the second optical waveguide 04 are located at a same layer, and the second optical waveguide 04 is also embedded into the insulation layer 021. In this case, the first optical waveguide 022 and the second optical waveguide 04 may be coupled in an end contact manner.

In addition, it can be learned from FIG. 12 and FIG. 14 that the first optical waveguide 022 may be ring-shaped (as shown in FIG. 12, in this case, the optical waveguide device may be a microring modulator or a microring optical switch). The first optical waveguide 022 may also be in a strip shape (as shown in FIG. 14). Therefore, the shape of the first optical waveguide 022 is not limited in this embodiment of this application.

In the manufacturing methods of the foregoing several optical waveguide devices provided in this application, if the bonding between the target structure 02 and the electro-optic crystal structure 03 is the last manufacturing process of the optical waveguide device, the method may be compatible with a CMOS process.

In addition, when the optical waveguide device provided in this embodiment of this application is prepared, a corresponding electro-optic crystal structure and a corresponding first optical waveguide may be selected according to requirements of the optical waveguide device that needs to be prepared (for example, requirements such as an operating wavelength, bandwidth, a modulation efficiency), and a size of each part in the optical waveguide device may be adjusted accordingly.

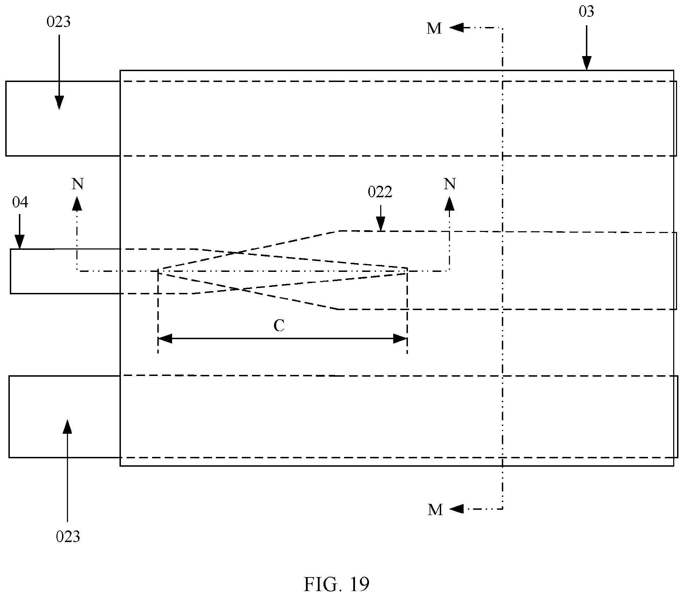

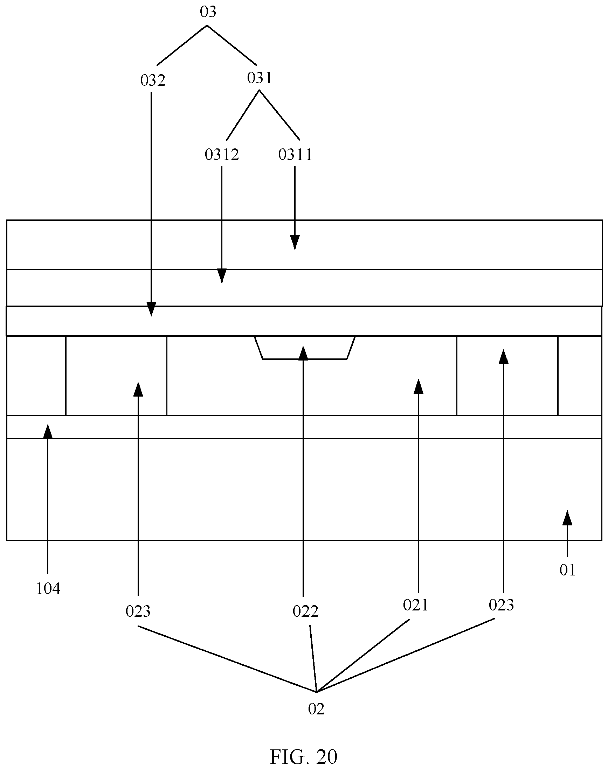

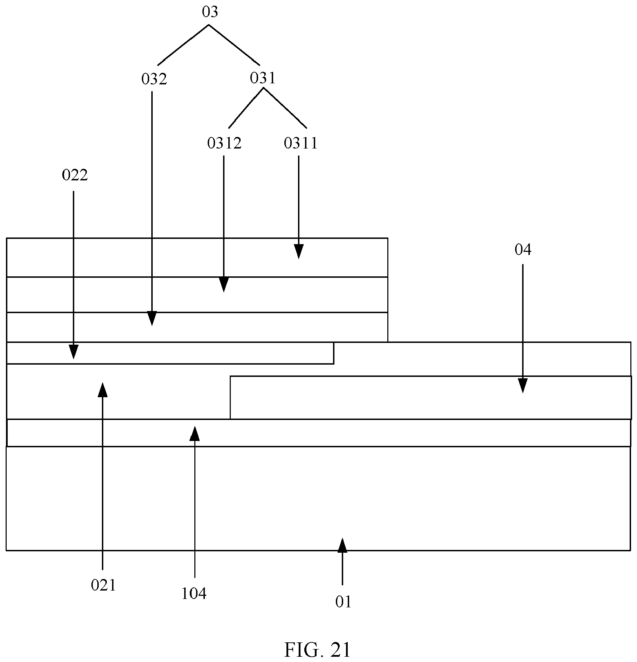

The following uses the following three examples to describe the size of each part in the optical waveguide device. It should be noted that, in the following three examples, that the operating wavelength of the optical waveguide device is 1550 nm and the optical waveguide device is a push-free MZI modulator is used as an example.
(1) In Example 1, a structure of the optical waveguide device may be shown in FIG. 19, FIG. 20, and FIG. 21. FIG. 20 is a schematic diagram of a cross section MM in FIG. 19. FIG. 21 is a schematic diagram of a cross section NN in FIG. 19. It should be noted that FIG. 19 shows only a first optical waveguide 022, an electrode 023, a second optical waveguide 04, and an electro-optic crystal structure 03 of the optical waveguide device, and does not show another structure.

In Example 1, materials of the first optical waveguide 022 and the second optical waveguide 04 may be a-Si:H, and the electro-optic crystal structure 03 includes a support layer 031 and an electro-optic crystal thin film 032, and a material of the electro-optic crystal thin film 032 is lithium niobate. The support layer 031 includes a silicon substrate 0311 and a silicon dioxide layer 0312. The optical waveguide device has a low transmission loss in a communication band of the operating wavelength, and a manufacturing method of the optical waveguide device may be compatible with the CMOS process.

Because an electro-optic crystal material has various heterogeneities, and electro-optic coefficients of the electro-optic crystal material in various crystal directions are different, an electro-optic coefficient of the electro-optic crystal structure may be adjusted by adjusting a relationship between a crystal direction of the electro-optic crystal material and another structure in the optical waveguide device.

For example, a crystal direction of lithium niobate includes a crystal direction x, a crystal direction y, and a crystal direction z. The crystal direction x is parallel to a direction x in a three-dimensional coordinate system, the crystal direction y is parallel to a direction y in the three-dimensional coordinate system, and the crystal direction z is parallel to a direction z in the three-dimensional coordinate system. In Example 1, an extension direction of the first optical waveguide 022 may be parallel to the crystal direction y, and a direction of an electric field formed between the electrodes 023 is parallel to the crystal direction z. In this case, an electro-optic coefficient of the electro-optic crystal structure 03 made of lithium niobate is 31 pm/V Optionally, when the optical waveguide device is shown in FIG. 11 and FIG. 12, and the electro-optic crystal structure includes a lithium niobate thin film, the crystal direction z of lithium niobate may be parallel to the direction of the electric field, and the crystal directions x and y of lithium niobate are both parallel to the lithium niobate thin film.

Continue to refer to FIG. 19, FIG. 20, and FIG. 21 in Example 1. The second optical waveguide 04 may be a single-mode optical waveguide. A thickness (whose direction is perpendicular to the substrate 01) of the first optical waveguide 022 is 220 nanometers and a width (whose direction is parallel to the direction of the electric field) is 500 nanometers. In the thickness direction, a distance between the first optical waveguide 022 and the second optical waveguide 04 is 100 nanometers, a thickness of the silicon dioxide layer 0312 is 2 micrometers, and a material of the electrode 023 is tungsten.

Modulation efficiency of the optical waveguide device may be represented by a product (Vπ·Lπ) of a half-wave voltage (Vπ) and a length (Lπ) of the electro-optic crystal structure in the extension direction of the first optical waveguide 022. A smaller product indicates higher modulation efficiency. In this embodiment of this application, the Vπ·Lπ may be reduced by adjusting a width and a thickness of the first optical waveguide located in the bonding region, a thickness of the electro-optic crystal thin film, and a spacing between a plurality of electrodes for forming an electric field, to improve modulation efficiency of the optical waveguide device. In addition, in this embodiment of this application, parameters such as a thickness and a width of the electrode 023 and a spacing between a plurality of electrodes may be adjusted, to increase modulation bandwidth of the optical waveguide device. An insertion loss between the first optical waveguide 022 and the second optical waveguide 04 may also be reduced by adjusting a coupling length between the two optical waveguides (a length of an overlapping part of the two optical waveguides, such as a length C in FIG. 19).

It is assumed that material properties of lithium niobate, silicon dioxide, single crystal silicon, and tungsten are as follows: a refractive index of lithium niobate is 2.21, a dielectric constant of lithium niobate is 28, and an electro-optic coefficient of lithium niobate is 31pm/V; a refractive index of hydrogenated amorphous silicon is 3.5 and a dielectric constant of hydrogenated amorphous silicon is 11.9; a refractive index of silicon dioxide is 1.44 and a dielectric constant of silicon dioxide is 3.9; a refractive index of single crystal silicon is 3.45 and a dielectric constant of single crystal silicon is 11.9; and a refractive index of tungsten is 2.22+4.85i, and i is an imaginary unit. For example, parameters of the optical waveguide device in Example 1 are as follows: a width of the first optical waveguide is 1 micrometer, a thickness of the first optical waveguide is 70 nanometers, an included angle between a third side and a second side is about 70°, a thickness of the electro-optic crystal thin film is 400 nanometers, and a spacing between adjacent electrodes is 4 micrometers. Thus, a waveguide transmission loss caused by the electrodes is about 0.05 decibels per centimeter (dB/cm). In this case, the Vπ·Lπ reaches about 1.5 volt·centimeters (V·cm), which is less than a Vπ·Lπ (2.3 V·cm) of an optical waveguide device obtained by bonding an optical waveguide made of hydrogenated amorphous silicon and the lithium niobate thin film. In addition, when the length of the coupling region is greater than about 20 micrometers, coupling efficiency between the first optical waveguide and the second optical waveguide may reach more than 99%.

(2) In example 2, for schematic diagrams of structures of the optical waveguide device, refer to FIG. 19, FIG. 20, and FIG. 21. Different from Example 1, materials of the first optical waveguide 022 and the second optical waveguide 04 in Example 2 may be silicon nitride (SiN). The first optical waveguide 022 and the second optical waveguide 04 made of silicon nitride can be configured to transmit visible light and near infrared light.

For example, when the operating wavelength is 1550 nanometers, parameters of the optical waveguide device in Example 2 are as follows: the second optical waveguide 04 may be a single-mode optical waveguide with a thickness of 400 nanometers and a width of 1000 nanometers, and a spacing between the first optical waveguide 022 and the second optical waveguide 04 in a thickness direction is 100 nanometers. A refractive index of silicon nitride is 2.0 and a dielectric constant of silicon nitride is 7.9. A width of the first optical waveguide is 1.5 micrometers, a thickness of the first optical waveguide is 300 nanometers, an included angle between a third side and a second side is about 70° to 80°, a thickness of the electro-optic crystal thin film is 250 nanometers, and a spacing between adjacent electrodes is 6 micrometers. In this way, a waveguide transmission loss caused by the electrode is about 0.05 dB/cm, and a Vπ·Lπ is about 2.3 V·cm, which is less than a Vπ·Lπ (6.7 V·cm) of an optical waveguide device obtained by bonding an optical waveguide made of silicon nitride and a lithium niobate thin film.

(3) In example 3, for schematic diagrams of structures of the optical waveguide device, refer to FIG. 19, FIG. 20, and FIG. 21. Different from Example 1, the electro-optic crystal structure 03 in the optical waveguide device in Example 3 is a bulk electro-optic crystal, such as bulk barium titanate. An electro-optic coefficient of the bulk barium titanate is higher than that of a barium titanate thin film. Therefore, the optical waveguide device in Example 3 has high light modulation efficiency. A crystal direction <110> of the bulk barium titanate may be parallel to an extension direction of the first optical waveguide 022. In this case, an electro-optic coefficient of the electro-optic crystal structure 03 is as high as 1920 pm/V.

For example, when the operating wavelength is 1550 nm, parameters of the optical waveguide device in Example 3 are as follows: a refractive index of bulk barium titanate is 2.4, a dielectric constant of bulk barium titanate is 2400, and an electro-optic coefficient of bulk barium titanate is 1920 pm/V; a thickness of the first optical waveguide is 100 nanometers and a width of the first optical waveguide is 1.2 micrometers; and a spacing between adjacent electrodes is 3.2 micrometers. In this way, a waveguide transmission loss caused by the electrode is about 0.05 dB/cm, and a Vπ·Lπ is about 171 V·µm (that is, 0.017 V·cm), which is less than a Vπ·Lπ (0.2 V·cm or 2.3 V·cm) of an optical waveguide device obtained by bonding an optical waveguide of the current material and a lithium niobate thin film. The foregoing describes a structure of the optical waveguide device provided in embodiments of this application, and the following describes an example of a manufacturing method of the optical waveguide device.

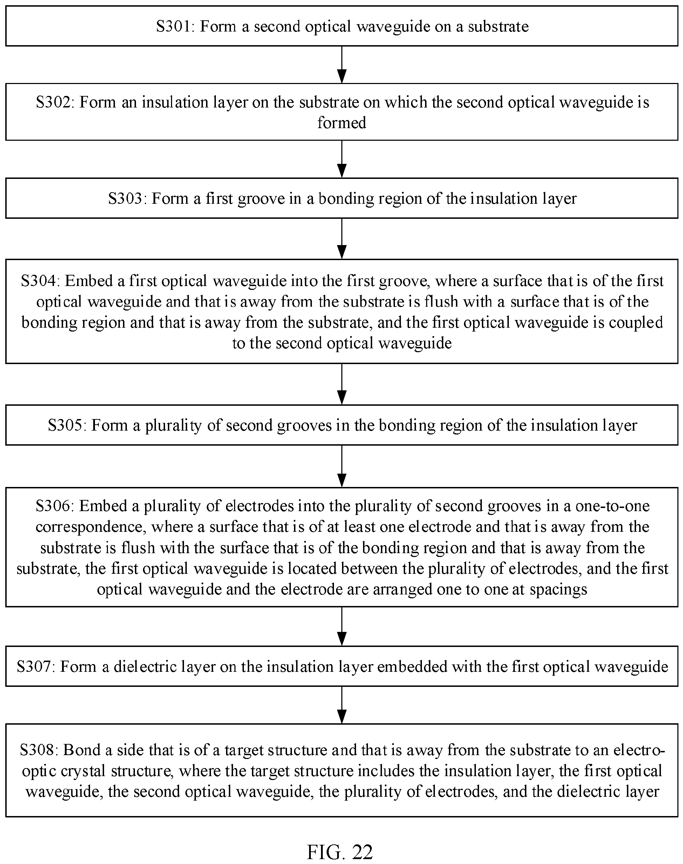

For example, FIG. 22 is a flowchart of a manufacturing method of an optical waveguide device according to an embodiment of this application. In the method, that the optical waveguide devices shown in FIG. 13, FIG. 12, and FIG. 15 are prepared is used as an example. As shown in FIG. 22, the manufacturing method of the optical waveguide device may include the following steps.

S301: Form a second optical waveguide on a substrate.

The second optical waveguide is formed on the substrate in various manners. This is not limited in this embodiment of this application.

For example, when the second optical waveguide is prepared, the second optical waveguide is directly formed on the substrate. For example, an optical waveguide material layer is first formed on the substrate. Then, patterning processing is performed on the optical waveguide material layer to obtain the second optical waveguide. A material of the optical waveguide material layer may be a-Si:H, SiN, TiO2, or the like.

For another example, as shown in FIG. 16, an auxiliary layer 104 may further exist between the second optical waveguide 04 and the substrate 01, and a material of the auxiliary layer 104 may be the same as or different from a material of the insulation layer 021. Before the second optical waveguide 04 is formed, the auxiliary layer 104 is first formed on the substrate 01, and then the second optical waveguide 04 is embedded on a surface that is of the auxiliary layer 104 and that is away from the substrate 01 by using an embedding process.

It should be noted that, if the second optical waveguide and a first optical waveguide are located at a same layer, S301 does not need to be performed, but the second optical waveguide is formed when the first optical waveguide is formed. S302: Form an insulation layer on the substrate on which the second optical waveguide is formed.

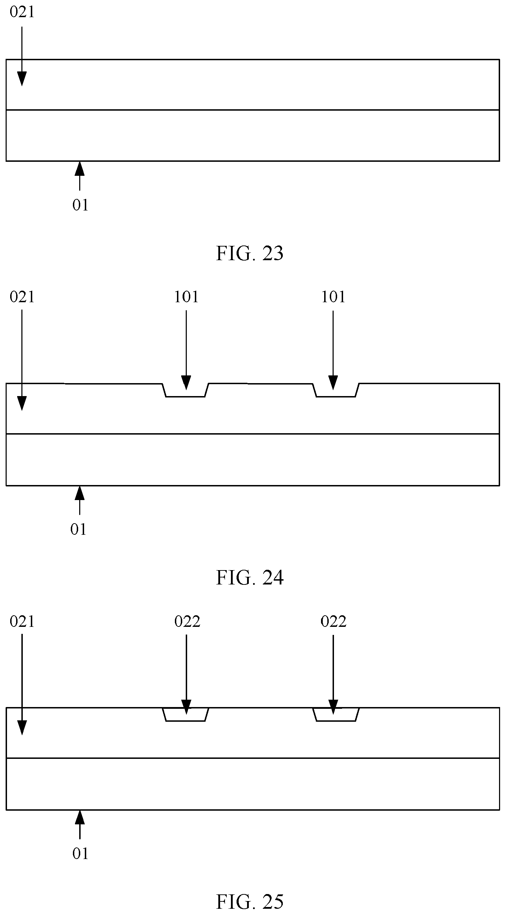

After the second optical waveguide is formed, an insulation material layer may be first formed on the substrate on which the second optical waveguide is formed. Then, CMP processing is performed on a surface that is of the insulation material layer and that is away from the substrate, to obtain an insulation layer 021 shown in FIG. 23. A material of the insulation material layer may be silicon dioxide.

S303: Form a first groove in a bonding region of the insulation layer.

As shown in FIG. 24, a first groove 101 may be formed in the bonding region of the insulation layer 021 in an etching manner.

S304: Embed the first optical waveguide into the first groove, where a surface that is of the first optical waveguide and that is away from the substrate is flush with a surface that is of the bonding region and that is away from the substrate, and the first optical waveguide is coupled to the second optical waveguide.

When the first optical waveguide is embedded into the first groove, a waveguide material layer may be first formed on the insulation layer on which the first groove is formed, and the waveguide material layer may cover the entire bonding region. Then, the CMP processing is performed on a surface that is of the waveguide material layer and that is away from the substrate, to remove a part that is in the waveguide material layer and that is located outside the first groove, to obtain a first optical waveguide 022 embedded into the first groove shown in FIG. 25.

Because the material of the optical waveguide material layer is different from a material of the insulation layer, when the CMP processing is performed on the optical waveguide material layer, a loss caused to the insulation layer is not large, and a part that is of the optical waveguide material layer and that is located outside the first groove can be effectively removed, so that the first optical waveguide whose surface is away from the substrate and is flush with the surface that is of the bonding region of the insulation layer and that is away from the substrate can be obtained.

S305: Form a plurality of second grooves in the bonding region of the insulation layer.

As shown in FIG. 25, a plurality of second grooves 102 may be formed in the bonding region into which the insulation layer of the first optical waveguide may be embedded. It should be noted that, in this embodiment of this application, that the first optical waveguide is first formed, and then an electrode is formed is used as an example. Alternatively, an electrode may be first formed, and then the first optical waveguide is formed. In this case, S305 and S306 may be performed first, and then S303 and S304 are performed.

S306: Embed a plurality of electrodes into the plurality of second grooves in a one-to-one correspondence, where a surface that is of at least one electrode and that is away from the substrate is flush with the surface that is of the bonding region and that is away from the substrate, the first optical waveguide is located between the plurality of electrodes, and the electrode and the first optical waveguide are arranged one to one at spacings.

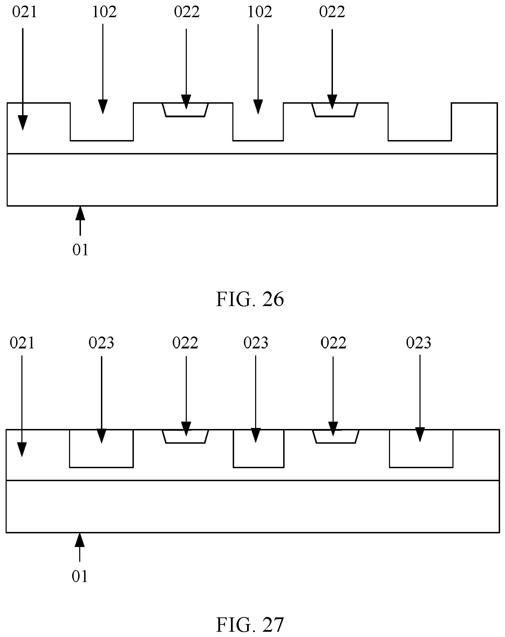

In this embodiment of this application, an example in which surfaces that are of the plurality of electrodes and that are away from the substrate is flush with the surface that is of the bonding region and that is away from the substrate. When the plurality of electrodes are embedded into the plurality of second grooves in the one-to-one correspondence, a conductive material layer may be first formed on the insulation layer on which the plurality of second grooves are formed; and then CMP processing is performed on a surface that is of the conductive material layer and that is away from the substrate, to remove a part that is of the conductive material layer and that is located outside the second groove, to obtain a plurality of electrodes 023 that are embedded into the plurality of second grooves in the one-to-one correspondence shown in FIG. 27.

S307: Form a dielectric layer on the insulation layer embedded with the first optical waveguide.

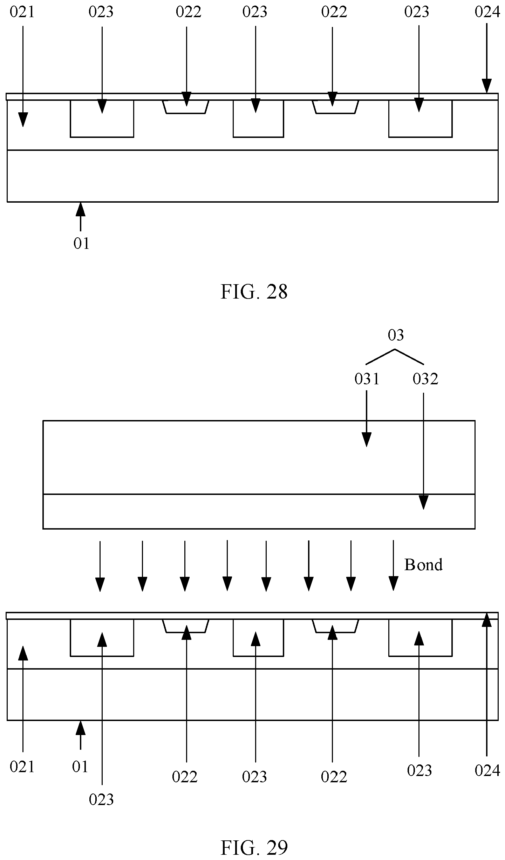

As shown in FIG. 28, a dielectric layer 024 may be deposited on the insulation layer 021 into which the first optical waveguide 022 and the electrode 023 are embedded.

S308: Bond a side that is of a target structure and that is away from the substrate to the electro-optic crystal structure, where the target structure includes the insulation layer, the first optical waveguide, the second optical waveguide, the plurality of electrodes, and the dielectric layer.

The structure obtained in FIG. 28 is the target structure. In S308, as shown in FIG. 29, the side that is of the target structure and that is away from the substrate 01 may be bonded to the electro-optic crystal structure 03, to obtain the optical waveguide device shown in FIG. 13, FIG. 12, and FIG. 15.

For example, the electro-optic crystal structure includes a bulk electro-optic crystal or an electro-optic crystal thin film. When the electro-optic crystal structure includes the electro-optic crystal thin film, the side that is of the target structure and that is away from the substrate may be bonded to a side on which the electro-optic crystal thin film in the electro-optic crystal structure is located. Optionally, when the electro-optic crystal structure includes a support layer and the electro-optic crystal thin film that are superimposed, the support layer may be further thinned or removed after S308.

It can be learned from the manufacturing method that the bonding the side that is of the target structure and that is away from the substrate with the electro-optic crystal structure is the last operation of the entire method, and when tungsten, which has little impact on performance of another device, is used as a material of the electrode in the optical waveguide device, the method may be compatible with a CMOS process.

In addition, when the optical waveguide device used for manufacturing is shown in FIG. 11 and FIG. 12, the method shown in FIG. 22 may not include S305 and S306. In addition, before forming the insulation layer on the substrate in S302 (or before S301), an electrode may be formed on the substrate, and the insulation layer may be formed on the substrate on which the electrode is formed in S302. In addition, the electro-optic crystal structure includes the support layer and the electro-optic crystal thin film that are superposed, and the support layer includes a conductive material; and when the side that is of the target structure and that is away from the substrate is bonded to the electro-optic crystal structure in S308, the side that is of the target structure and that is away from the substrate may be bonded to the side on which the electro-optic crystal thin film in the electro-optic crystal structure is located.

In this application, the terms "first", "second", and the like are merely intended for description, but cannot be understood as an indication or implication of relative importance. The term "at least one" refers to one or more, and the term "a plurality of" refers to two or more, unless expressly limited otherwise. A term "and/or" describes only an association relationship between associated objects and indicates that there may be three relationships. For example, A and/or B may represent the following three cases: Only A exists, both A and B exist, and only B exists.

For different types of embodiments such as the method embodiment and the component embodiment provided in embodiments of this application, refer to each other. This is not limited in embodiments of this application. A sequence of the operations of the method embodiment provided in embodiments of this application can be properly adjusted, and the operations can be correspondingly added or deleted based on a situation. Any method that can be easily figured out by a person skilled in the art within a technical scope disclosed in this application shall fall within the protection scope of this application. Therefore, details are not described again.

In the corresponding embodiments provided in this application, it should be understood that the disclosed device may be implemented in other manners. The foregoing descriptions are merely optional implementations of this application, but the protection scope of this application is not limited thereto. Any equivalent modification or replacement readily figured out by a person skilled in the art within the technical scope disclosed in this application shall fall within the protection scope of this application. Therefore, the protection scope of this application shall be subject to the protection scope of the claims.

## Claims

1. An optical waveguide device, wherein the optical waveguide device comprises a substrate, a target structure, and an electro-optic crystal structure;
the target structure comprises an insulation layer and a first optical waveguide;
a bonding region of the insulation layer has a first groove, the first optical waveguide is embedded into the first groove, and a surface that is of the first optical waveguide and that is away from the substrate is flush with a surface that is of the bonding region and that is away from the substrate; and
the electro-optic crystal structure is bonded to a side that is of the target structure and that is away from the substrate.

2. The optical waveguide device according to claim 1, wherein a cross section of the first optical waveguide in an extension direction perpendicular to the first optical waveguide comprises a first side and a second side that are opposite to each other, the first side is close to the substrate, the second side is away from the substrate, and a length of the first side is less than a length of the second side.

3. The optical waveguide device according to claim 2, wherein the cross section further comprises a third side, the third side is connected to the first side and the second side, and a range of an included angle between the third side and the second side is [60°, 80°].

4. The optical waveguide device according to claim 1, wherein a cross section of the first optical waveguide in an extension direction perpendicular to the first optical waveguide comprises a first side and a second side that are opposite to each other, the first side is close to the substrate, the second side is away from the substrate, and a length of the first side is equal to a length of the second side.

5. The optical waveguide device according to any one of claims 1 to 4, wherein the electro-optic crystal structure comprises a bulk electro-optic crystal or an electro-optic crystal thin film.

6. The optical waveguide device according to any one of claims 1 to 5, wherein the electro-optic crystal structure comprises a support layer and the electro-optic crystal thin film that are superposed, and the side that is of the target structure and that is away from the substrate is bonded to a side on which the electro-optic crystal thin film in the electro-optic crystal structure is located.

7. The optical waveguide device according to any one of claims 1 to 6, wherein the bonding region further has a plurality of second grooves, and the target structure further comprises a plurality of electrodes embedded into the plurality of second grooves in a one-to-one correspondence, wherein a surface that is of at least one electrode and that is away from the substrate is flush with the surface that is of the bonding region and that is away from the substrate, the first optical waveguide is located between the plurality of electrodes, and the electrodes and the first optical waveguide in the optical waveguide device are arranged one to one at spacings.

8. The optical waveguide device according to any one of claims 1 to 4 and 6, wherein the optical waveguide device further comprises an electrode, and the electrode is located between the substrate and the insulation layer; and
the electro-optic crystal structure comprises the support layer and the electro-optic crystal thin film that are superposed, and the support layer comprises a conductive material, and the side that is of the target structure and that is away from the substrate is bonded to the side on which the electro-optic crystal thin film in the electro-optic crystal structure is located.

9. The optical waveguide device according to claim 7 or 8, wherein a material of the electrode comprises at least one of aluminum, tungsten, titanium, titanium nitride, and indium tin oxide.

10. The optical waveguide device according to any one of claims 1 to 9, wherein the target structure further comprises a dielectric layer, the dielectric layer is located between the bonding region of the insulation layer and the electro-optic crystal structure, and the dielectric layer is configured to prevent metal ions on a side on which the insulation layer is located from diffusing to the electro-optic crystal structure.

11. The optical waveguide device according to claim 10, wherein a thickness of the dielectric layer is less than or equal to 10 nanometers.

12. The optical waveguide device according to claim 10 or 11, wherein a melting point of the dielectric layer is lower than a melting point of the target structure and a melting point of the electro-optic crystal structure.

13. The optical waveguide device according to any one of claims 1 to 12, wherein the optical waveguide device further comprises a second optical waveguide, the second optical waveguide is located between the substrate and the insulation layer, and the first optical waveguide is coupled to the second optical waveguide.

14. The optical waveguide device according to claim 13, wherein an orthographic projection of the first optical waveguide on the substrate and an orthographic projection of the second optical waveguide on the substrate at least partially overlap; and
an orthographic projection of an end that is of the first optical waveguide and that is close to the second optical waveguide on the substrate is wedge-shaped; and an orthographic projection of an end that is of the second optical waveguide and that is close to the first optical waveguide on the substrate is wedge-shaped.

15. The optical waveguide device according to any one of claims 1 to 14, wherein
a material of the first optical waveguide comprises hydrogenated amorphous silicon, and the electro-optic crystal structure comprises a lithium niobate thin film; and Vπ·Lπ is less than 2.3 volt·centimeters, wherein Vπ indicates a half-wave voltage of the optical waveguide device, and Lπ indicates a length of the electro-optic crystal structure in the extension direction of the first optical waveguide;
a material of the first optical waveguide comprises silicon nitride, and the electro-optic crystal structure comprises a lithium niobate thin film; and Vπ·Lπ is less than 6.7 volt-centimeters, wherein Vπ indicates a half-wave voltage of the optical waveguide device, and Lπ indicates a length of the electro-optic crystal structure in the extension direction of the first optical waveguide; or
a material of the first optical waveguide comprises hydrogenated amorphous silicon, and the electro-optic crystal structure comprises bulk barium titanate; and Vπ·Lπ is less than 0.2 volt-centimeters, wherein Vπ indicates a half-wave voltage of the optical waveguide device, and Lπ indicates a length of the electro-optic crystal structure in the extension direction of the first optical waveguide.

16. An optical chip, wherein the optical chip comprises the optical waveguide device according to any one of claims 1 to 15.

17. A communication device, wherein the communication device comprises the optical chip according to claim 16.
